# EUROPÄISCHE PATENTSCHRIFT

(11) **EP 1 614 950 B1**
(45) Veröffentlichungstag und Bekanntmachung des Hinweises auf die Patenterteilung: **07.03.2007**
(21) Anmeldenummer: 05104052.5
(22) Anmeldetag: 13.05.2005
(51) Int. Cl.: F16L 15/04

(54) **Verbindungselement für Leitungen**
Pipe coupling
Raccord pour tuyaux

(30) Priorität: 08.07.2004 DE 202004010711 U
(43) Veröffentlichungstag der Anmeldung: 11.01.2006
(73) Patentinhaber: VIEGA GmbH & Co. KG., 57439 Attendorn (DE)
(72) Erfinder: Viegener, Walter, 57439 Attendorn (DE)
(74) Vertreter: Cohausz & Florack

(56) Entgegenhaltungen:
- DE-U1- 20 311 834

## Beschreibung

Die vorliegende Erfindung betrifft ein Verbindungselement für Leitungen, insbesondere mit einer Gewindehülse für Rohrverbindungen, mit einem Rohrabschnitt, an dem eine Kontaktfläche zur Verbindung mit einer Hülse vorgesehen ist, wobei die Kontaktfläche mit einer Beschichtung zum Abdichten überzogen ist.

Aus der DE 30 33 859 ist eine Schraubverbindung für Armaturen bekannt, bei der ein Gewindeabschnitt mit einem Dichtstoff überzogen ist. Als Dichtstoff wird beispielsweise Hepoxydlack genannt, der durch Tauchen, Pinseln oder Spritzen auf die Dichtfläche solcher Schraubverbindungen angebracht wird. Bei dieser Schraubverbindung ist nachteilig, dass die Dichtungsfunktion der genannten Dichtstoffe begrenzt ist. Zudem kann die Beschichtung des Dichtstoffes beim Lagern und dem Transport beschädigt werden, sodass eine sichere Dichtfunktion nicht mehr gewährleistet werden kann.

Aus der DE 20311834 U ist ein Verbindungselement für Leitungen mit den Merkmalen des Oberbegriffs des Anspruchs 1 bekannt.

Es ist daher Aufgabe der vorliegenden Erfindung ein Verbindungselement für Leitungen zu schaffen, durch das auf einfache Weise eine abgedichtete Verbindung hergestellt werden kann, auch wenn das entsprechende Verbindungselement längere Zeit lagert.

Diese Aufgabe wird mit einem Verbindungselement mit den Merkmalen des Anspruches 1 gelöst.

Erfindungsgemäß ist die Beschichtung unter einer Schutzhülle angeordnet, die bei Verbindung mit der Hülse zerstört oder weggeschoben wird. Die Schutzhülle schirmt die Beschichtung an der Kontaktfläche nach außen hin ab und stellt somit einen Schutz vor dem Austrocknen bereit. Dadurch kann als Beschichtungsmaterial auch eine Paste eingesetzt werden, die ansonsten bei langer Lagerung ihre Dichtwirkung verlieren könnte. Zudem ist die Beschichtung vor mechanischen Einflüssen geschützt angeordnet, sodass auch bei Transport und Lagerung die Dichtfunktion nicht beeinträchtigt wird.

Gemäß einer bevorzugten Ausführungsform ist die Schutzhülle aus einer Kunststofffolie gebildet. Dadurch kann die Schichtdicke der Beschichtung und der Schutzhülle gering gehalten werden und es wird eine dauerhafte Abdichtung der Beschichtung erhalten, solange die Schutzhülle vorhanden ist. Die Kunststofffolie lässt sich dabei auf einfache Weise abscheren, um die Beschichtung freizugeben. Hierbei kann die Kontaktfläche als Gewinde ausgebildet sein, sodass durch die einzelnen Gewindegänge die Kunststofffolie beim Eindrehen zerstört wird.

Eine besonders gute Abdichtung lässt sich erreichen, wenn die Beschichtung aus einer Mischung aus Hanf und Gewindeabdichtpaste gebildet ist. Dabei können die Vorteile dieses Materials genutzt werden, ohne dass der Handwerker manuell auf ein Gewinde das Hanf aufwickeln und mit Gewindedichtpaste bestreichen muss. Die Beschichtung kann gerade bei Gewindeverbindungen eingesetzt werden.

Für die Herstellung des Verbindungselementes kann die Beschichtung auf die Kontaktfläche durch Wickeln, Sprühen oder Eintauchen aufgebracht werden, wobei anschließend die Schutzhülle beispielsweise durch Aufschrumpfen eines Kunststofffolienschlauches erhalten werden kann.

Die Erfindung wird nachfolgend anhand eines Ausführungsbeispieles näher beschrieben. Es zeigen:
- Figur 1: eine Ansicht eines erfindungsgemäßen Verbindungselementes;
- Figur 2: eine vergrößerte schematische Explosionsdarstellung des Kontaktbereiches, und
- Figur 3: eine Detailansicht des Kontaktbereiches ähnlich der Figur 2.

Ein Verbindungselement 1 kann als Armatur, insbesondere Ventil, Hahn, Verbindungsstutzen oder Fitting aus Metall oder Kunststoff ausgebildet sein und umfasst einen Rohrabschnitt 2, der zur Verbindung mit einer nicht dargestellten Hülse an der Außenseite ein Gewinde 3 aufweist. Das Gewinde 3 besitzt einzelne Gewindegänge 4, die zackenförmig ausgebildet sind und mit einer Beschichtung 5 überzogen sind.

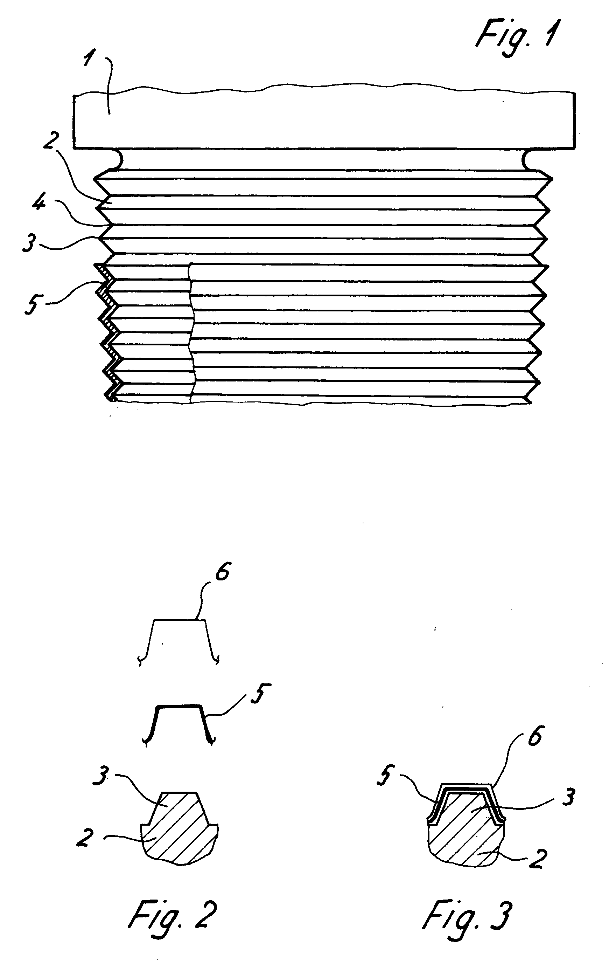

Wie in der vergrößerten Darstellung der Figur 2 zu sehen ist, steht von dem Rohrabschnitt 2 ein Gewinde 3 hervor, dessen Kontur im Querschnitt im Wesentlichen konisch ist. Dieses Gewinde 3 ist mit einer Beschichtung 5 aus einer Mischung aus Gewindeabdichtpaste und zerkleinertem Hanf überzogen, die durch Wickeln, Sprühen, Eintauchen oder auf andere Weise auf das Gewinde 3 aufgebracht werden kann. Dabei kann der Auftrag maschinell erfolgen.

Um die Beschichtung 5 vor einem Austrocknen oder mechanischen Einflüssen zu schützen, ist eine Schutzhülle 6 aus einer Kunststofffolie um die Beschichtung 5 angeordnet. Die Schutzhülle 6 kann dabei durch Aufschrumpfen eines Kunststofffolienschlauches formschlüssig mit der Beschichtung 5 verbunden werden. Durch die Schutzhülle 6 wird gewährleistet, dass kein Schmutz an die Beschichtung 5 gelangen kann und die Beschichtung 5 nicht abfallen kann oder mit anderen Medien in Berührung gelangt.

In Figur 3 ist dann die Einheit aus Gewinde 3, Beschichtung 5 und Schutzhülle 6 im fertigen Zustand schematisch dargestellt. Erst durch Einschrauben in ein Innengewinde wird die Schutzhülle 6 zerschnitten, sodass die Beschichtung 5 ihre Wirkung entfalten kann. Der Handwerker muss demnach lediglich eine Verschraubung vornehmen, wobei durch die Beschichtung 5 eine Abdichtung gewährleistet wird. Die Schutzhülle 6 kann dabei trinkwassergeeignet sein, um eine Verschmutzung zu vermeiden.

In dem gezeigten Ausrührungsbeispiel ist die Beschichtung aus Gewindedichtpaste und Hanf gebildet. Die beiden Stoffe können zerkleinert und miteinander gemischt sein. Es ist natürlich möglich, auch andere Stoffe zu verwenden oder Zusatzstoffe zu der Beschichtung 5 hinzuzufügen.

Ferner ist die Beschichtung 5 an einem Gewinde 3 angeordnet. Es ist auch möglich, das Gewinde 3 mit einer anderen Kontur zu versehen oder die Beschichtung 5 auf einer Klemmfläche, beispielsweise einem Konus für die Abdichtung aufzutragen.

## Patentansprüche

1. Verbindungselement für Leitungen, mit einer Hülse insbesondere mit einer Gewindehülse für Rohrverbindungen, mit einem Rohrabschnitt (2), an dem eine Kontaktfläche(3) zur Verbindung mit einer Hülse vorgesehen ist, wobei die Kontaktfläche (3) mit einer Beschichtung (5) zum Abdichten überzogen ist, wobei die Beschichtung (5) unter einer Schutzhülle (6) angeordnet ist, die bei der Verbindung mit der Hülse zerstört oder weggeschoben wird, **dadurch gekennzeichnet, dass** die Schutzhülle durch einen im Bereich der Beschichtung aufgeschrumpften Kunststofffolienschlauch gebildet ist.

2. Verbindungselement nach Anspruch 1, **dadurch gekennzeichnet, dass** die Schutzhülle (6) aus einer Kunststofffolie gebildet ist.

3. Verbindungselement nach Anspruch 1 oder 2, **dadurch gekennzeichnet, dass** die Kontaktfläche (3) als Gewinde ausgebildet ist.

4. Verbindungselement nach einem der Ansprüche 1 bis 3, **dadurch gekennzeichnet, dass** die Beschichtung aus einer Mischung aus Hanf und Gewindeabdichtpaste gebildet ist.

5. Verbindungselement nach einem der Ansprüche 1 bis 4, **dadurch gekennzeichnet, dass** die Beschichtung (5) eine Dicke zwischen 0,02 und 1 mm, vorzugsweise 0,2 bis 0,6 mm aufweist.

## Claims

1. Connecting element for pipings having a sleeve, particularly a threaded sleeve for pipe connections, comprising a tube section (2) provided with a contact surface (3) for connection with a sleeve, the contact surface (3) being covered by a coating (5) for sealing, the coating (5) being provided under a protective cover (6) which is destroyed or pushed off when making connection with the sleeve, **characterized in that** the protective cover is formed by a plastic film tubing shrink-fit in the area of the coating.

2. Connecting element as claimed in claim 1, **characterized in that** the protective cover (6) is made of plastic film.

3. Connecting element as claimed in claim 1 or 2, **characterized in that** the contact surface (3) is formed as a thread.

4. Connecting element as claimed in one of claims 1 to 3, **characterized in that** the coating is formed from a mixture of hemp and a thread caulking paste.

5. Connecting element as claimed in one of claims 1 to 4, **characterized in that** the coating (5) has a thickness between 0,02 and 1 mm, preferably 0,2 to 0,6 mm.

## Revendications

1. Elément de liaison pour conduits comportant un manchon, en particulier un manchon fileté pour joints tubulaires, comportant une portion tubulaire (2), sur laquelle est prévue une surface de contact (3) pour la liaison avec un manchon, la surface de contact (3) étant recouverte d'un revêtement (5) d'étanchéité, le revêtement étant disposé sous une gaine de protection (6) qui est détruite ou retirée lors de la liaison avec le manchon, **caractérisé en ce que** la gaine de protection est formée par un tube flexible en feuille de matière plastique rétréci dans la zone du revêtement.

2. Élément de liaison selon la revendication 1, **caractérisé en ce que** la gaine de protection (6) est formée par une feuille de matière plastique.

3. Élément de liaison selon les revendications 1 ou 2, **caractérisé en ce que** la surface de contact (3) est formé par un filetage.

4. Élément de liaison selon l'une quelconque des revendications 1 à 3, **caractérisé en ce que** le revêtement est formé par un mélange de chanvre et d'une pâte d'étanchéité pour raccord fileté.

5. Élément de liaison selon l'une quelconque des revendications 1 à 4, **caractérisé en ce que** le revêtement (5) comporte une épaisseur entre 0,02 et 1 mm, préférablement, entre 0,2 et 0,6 mm.
